# EUROPÄISCHE PATENTSCHRIFT

(11) **EP 0 864 486 B1**
(45) Veröffentlichungstag und Bekanntmachung des Hinweises auf die Patenterteilung: **13.08.2003**
(21) Anmeldenummer: 98200538.1
(22) Anmeldetag: 19.02.1998
(51) Int. Cl.: B62J 6/06

(54) **Fahrraddynamo**
Bicycle dynamo
Dynamo de bicyclette

(30) Priorität: 14.03.1997 NL 1005536
(43) Veröffentlichungstag der Anmeldung: 16.09.1998
(73) Patentinhaber: STENMAN HOLLAND B.V., NL-3903 AV Veenendaal (NL)
(72) Erfinder: Vellinga, Jacob, 3906 BE Veenendaal (NL)
(74) Vertreter: Timmers, Cornelis Herman Johannes

(56) Entgegenhaltungen:
- FR-A- 1 112 475
- GB-A- 630 617

## Beschreibung

Die Erfindung bezieht sich auf einer Träger- und Befestigungsvorrichtung zum halten und in zumindestens eine Endlage Arretieren des, einen Rotor und einen Stator aufnehmenden, Gehäuses eines Fahrraddynamos.

Eine derartige Vorrichtung ist an sich bekannt; diese bekannte Vorrichtung wird fest an dem Fahrradgestell befestigt und umfasst eine um einen beschränkten Winkel unter Federspannung drehbare Achse, die mit dem Dynamogehäuse verbunden ist und in eine Endlage arretiert werden kann.

Diese bekannte Vorrichtung hat den Nachteil, nur die Montage des Dynamos an einer Seite (links oder rechts) des Fahrrads zu gestatten, während für die Versorgung des gesamten Marktes zwei Arten von Vorrichungen sind. Dieser Nachteil ist nicht gering, da auf dem Festland Europas, abhängig vom jeweiligen Land, Fahrraddynamos sowohl links, als auch rechts vom Rad montiert werden.

Der Erfindung liegt die Aufgabe zugrunde, diesen Nachteil zu beheben und dies wird erfindungsgemäß durch die in dem Hauptanspruch formulierten Maßnahmen erreicht; bevorzugte Ausführungsformen sind in den Ansprüchen 2 bis 4 beschrieben.

Das Schutzbegehren erstreckt sich weiter auf einen in Anspruch 5 definierten Fahrraddynamo.

Mit der erfindungsgemäßen Vorrichtung werden zwei entschiedene Vorteile erreicht: Die Konstruktion ist, unter Beibehaltung der gewünschten Betriebssicherheit und leichteren Bedienbarkeit, einfacher und kostengünstiger, und außerdem kann der damit versehene Dynamo sowohl links, als auch rechts vom Vorderrad montiert werden.

Bemerkt wird, daß die britische Patentschrift 630617 einen Dynamoträger beschreibt, der zwei Endlagen gestattet, und bei dem der Dynamo am Ende einer Achse, in der zwei in Längsrichtung verlaufende, sich gegenüberliegende Rillen geformt sind, befestigt ist; in jeweils einer ist schwenkbar das eine Ende eines kurzen Kipparms angeordnet; die jeweiligen anderen Armenden sind mit den Enden einer Blattfeder verbunden.

Die französische Patentschrift 1 112 475 beschreibt eine Dynamobefestigung mit einer um die Abstützungsachse angeordneten Schraubenfeder, bei der in dem Inneren des Dynamogehäuses Anschlagnocken geformt sind, die aus dem Material des Dynamogehäuses herausgedrückt sind.

Die Erfindung wird anhand der Zeichnung erläutert. Es zeigen:
- Fig. 1: einen perspektivisch kompletten erfindungsgemäßen Fahrraddynamo, also die Kombination des Dynamogehäuses und der Vorrichtung;
- Fig. 2: eine perspektivische Darstellung in aufgelösten Einzelteilen der Vorrichtung deren zusammensetzenden Elementen.
- Fig. 3a,3b,3c: die zwei Endlagen der Vorrichtung und dessen Zwischenlage zu dem Dynamobefestigungselement;
- Fig. 4: eine perspektivische Obenansicht einer geänderten Ausbildung den Vorrichtung und
- Fig. 5a,5b,5c: deren zwei mögliche Endlagen und die Zwischenlage.

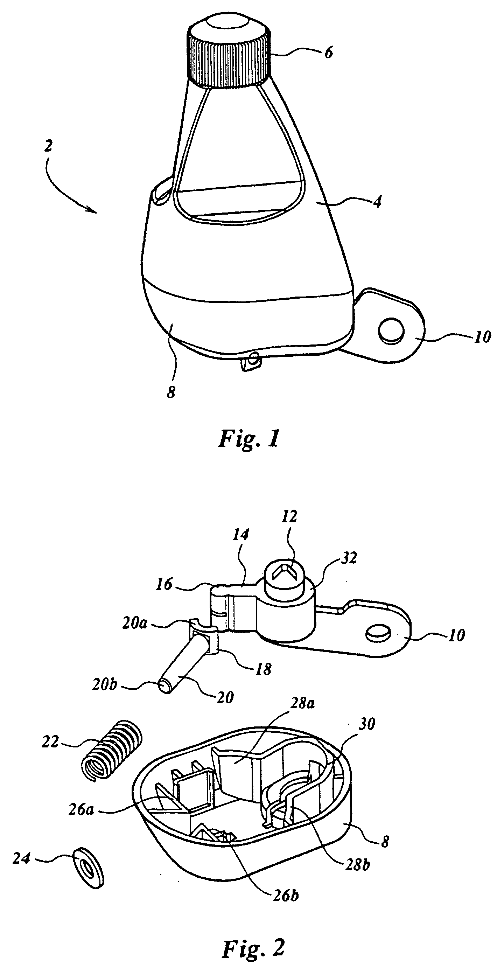

Fig. 1 zeigt einen kompletten Dynamo 2, bestehend aus dem Dynamogehäuse 4 mit in diesem den, nicht sichtbaren, herkömmlichen Stator und den Rotor, dessen Achse durch das Gehäuse 4 hindurch nach außen ausgeführt ist, und das mit dem Fahrradreifen zusammenwirkende Ritzel 6 trägt.

An dem Gehäuseteil 4 ist der Träger 8, aus dem die herkömmliche Befestigungslippe 10 zur Befestigung an der, nicht gezeichneten, Vorderradgabel eines Fahrrads herausragt, fest befestigt.

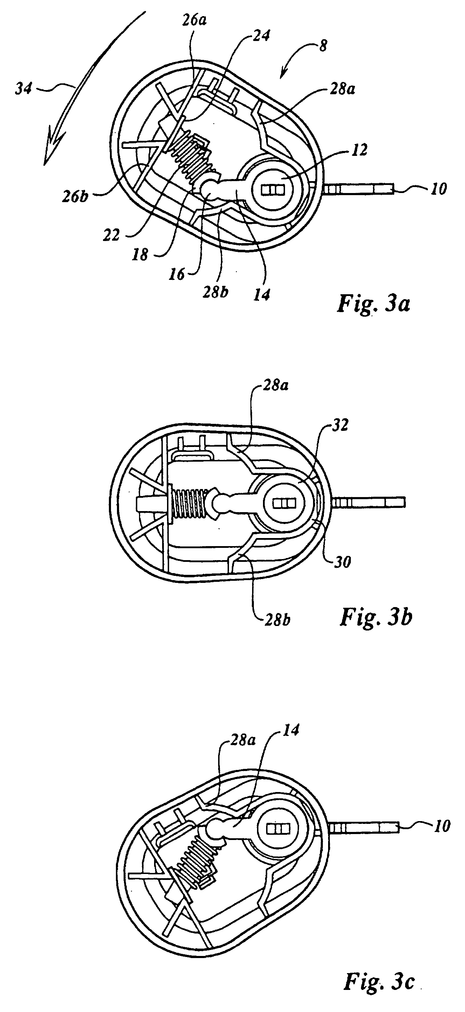

Die erfindungsgemäß vorgeschlagene Ausführung der Vorrichtung die zwei Endlagen ermöglicht, so daß der komplette Dynamo sowohl links als rechts vom Vorderrad montiert werden kann, ist in aufgelösten Einzelteilen in Fig. 2 gezeigt. In dem Gehäuse des Trägers 8 ist, um einen beschränkten Winkel drehbar, ein Achsschenkel 12 gelagert, der an dem unteren Ende die herkömmliche Befestigungslippe 10 trägt; weiter trägt der Achsschenkel 12 diametral hiergegenüber einen länglichen, in dem Gehäuse gelagerten, Nocken oder Finger 14. Dessen Ende 16 wirkt formschlüssig zusammen mit einem Gabelteil 18 an dem einen Ende 20a einer Führungsstange 20, um welche die Schraubenfeder 22 angeordnet ist; im montierten Zustand - sieh die Figuren 3a bis 3c - läuft das andere Ende 20b der Stange so unter Einfügung eines Schließringes 24 zwischen einem aus zwei senkrechten Kanten 26a, 26b bestehenden Gegenlager, gegen dem der Ring 24 ruht. Zwei senkrechte Ränder 28a, 28b, miteinander verbunden durch einen gekrümmten senkrechten Verbindingsrand 30, welcher eine Führung für den die Achse 12 umschließenden verdickten Teil 32 des Nockens 14 bildet, bilden Anschlagflächen, die die Endlagen des Nockens 14 bestimmen.

Die Wirkung des Ganzen geht aus den Figuren 3a bis 3c hervor. In der in Fig. 3a gezeichneten Endlage liegt der Nocken 14 an dem Anschlagrand 28b an, so daß der Träger 8 dann unter Federspannung eine erste definierte Endlage gegenüber der Befestigungslippe 10 aufweist. Bei Schwenkung des Trägers 8 in Richtung auf den Pfeil 34 dreht sich der Träger 8, und damit auch das mit diesem verbundene Dynamogehäuse 4, um die Achse 12, in erster Instanz bis zu der in Fig. 3b gezeichneten Zwischenlage und danach unter Federspannung bis zu der in Fig. 3c gezeichneten zweiten Endlage.

Es gibt für den erfindungsgemäßen Dynamo also zwei Anwendungsmöglichkeiten. Wenn der Dynamo in Fahrtrichtung und von oben gesehen links vom Vorderrad montiert wird, so wird die Lage nach Fig. 3c die stabile Endlage sein, in der das Ritzel 6 frei vom Vorderrad ist.

Man wird selbstverständlich dann die Montage in solcher Weise ausführen, daß die Endlage nach Fig. 3a gerade nicht erreicht wird, so daß im Betriebsstand des Dynamos der Nocken 14 gerade nicht an dem senkrechten Rand 28b und dem Ritzel 6 anliegt, also unter Federspannung gegen dem Reifen ruht. Sollte der Dynamo dagegen in Fahrtrichtung gesehen rechts von dem Vorderrad montiert werden, so wird Fig. 3a die Endlage, in der das Ritzel 6 frei vom Vorderrad ist, und wird Fig. 3c der Betriebsstand sein; auch dann wird man den Dynamo in solcher Weise montieren, daß die in Fig. 3c gezeichnete Lage, in der der Nocken 14 an dem senkrechten Endrand 28a anliegt, gerade nicht erreicht wird.

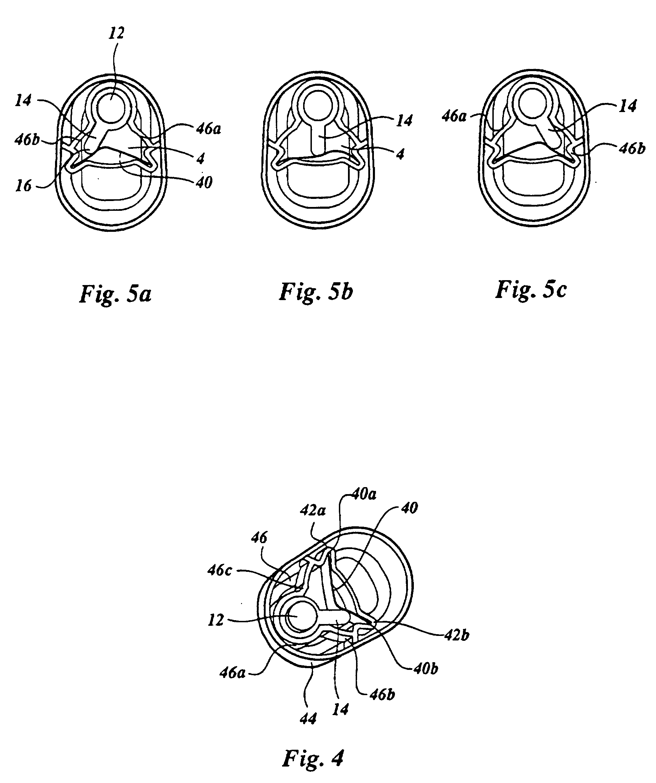

Fig. 4 zeigt eine geänderte Ausbildung, bei der der Nocken 14 nicht mit einer Schraubenfeder, sondern mit einer Blattfeder 40 zusammenwirkt, deren Enden 40a, 40b in Liegeplätze 42a, 42b, die durch einen in dem Trägergehäuse 44 geformten profilierten senkrechten Rand 46 gebildet sind, aufgenommen sind. Dieser Rand 46 hat einen ersten gekrümmten Teil 46a, der den verdickten Teil 32 des Nockens 14 teilweise umschließt und zwei von diesem abgehende Anschlagränder 46b, 46c, die die Endlagen des Nockens 14 bestimmen.

Die Figuren 5a - 5c verdeutlichen die Wirkung dieser Ausführungsform. In dem Stand nach Fig. 5a liegt der Nocken 14 an dem Anschlagrand 46 in der ersten Endlage an; dieser wird durch die Einwirkung der Blattfeder 40 auf das Ende 16 des Nockens 14 in der Lage gehalten. Fig. 5b zeigt die - instabile - Mittellage und Fig. 5c die zweite Endlage. Auch mit diesem Mechanismus kann der Dynamo sowohl links, als auch rechts an dem Vorderrad montiert werden.

## Patentansprüche

1. Träger-und Befestigungsvorrichtung zum halten und in zumindestens eine Endlage Arretieren des, einen Rotor und einen Stator aufnehmenden Gehäuses (4) eines Fahrraddynamos, **dadurch gekennzeichnet, daß** ein Träger (8) der Vorrichtung sich um einen beschränkten Winkel um einen Achsschenkel der Vorrichtung drehen kann, der sowohl ein mit dem Fahrradgestell zu kuppelndes Befestigungselement (10), als auch einen radial herausragenden Nocken (14) trägt, dessen freies Ende mit einem im Abstand gegenüber in dem Träger abgestützten Federelement (22, 40) zusammen wirkt, das auf diesen Nocken (14) eine Kraft mit einer, die Mittellinie des Achsschenkels (12) in einer von zwei gegensätzlichen Richtungen kreuzenden Komponente ausüben kann, und die Rotation um den Achsschenkel (12) von zumindestens einem, eine stabile Endlage des Trägers bestimmenden Anschlag (28a, 28b; 46a, 46b) beschränkt wird.

2. Vorrichtung nach Anspruch 1, **gekennzeichnet durch** zwei, jeweils eine Endlage der Achse bestimmende, mit dem Nocken zusammensetzende, Anschläge (28a, 28b; 46a, 46b).

3. Vorrichtung nach Anspruch 2, **dadurch gekennzeichnet, daß** die Feder eine Schraubenfeder (22) ist, angeordnet um ein Führungselement (20), das mit einem Ende (20a) formschlüssig und beweglich mit dem Ende (16) des Nockens (14) zusammenwirkt und mit dem anderen Ende (20b) durch eine diametral gegenüber der Achse in dem Träger angeordnete Lagerung (26a, 26b) geführt ist.

4. Vorrichtung nach Anspruch 2, **dadurch gekennzeichnet, daß** die Feder eine zu der Achse hin gewölbte Blattfeder (40) ist, deren Fläche im wesentlichen parallel zu der Mittellinie der Achse verläuft und deren beide Enden (40a, 40b) gegenüber der Achse und beidseitig davon in dem Träger abgestützt sind (42a, 42b).

5. Fahrraddynamo, mit einem nach einem der Ansprüche 1 - 4 versehenen Vorrichtung, fest angeordnet an dem gegenüber dem Rotorritzel (6) liegenden Ende dessen Rotor und Stator aufnehmendem Gehäuse (4).

## Claims

1. A bracket and attachment device for holding and fixing in at least one end position the housing (4), accommodating a rotor and a stator, of a bicycle dynamo, **characterised in that** a bracket (8) of the device may rotate by a limited angle about an axle leg (12) of the device, which leg carries both an attachment element (10) for coupling with the bicycle frame and a radially projecting cam (14), whose free end interacts with a spring element (22, 40) supported at a distance therefrom in the bracket, which spring element (22, 40) may exert on this cam (14) a force with a component crossing the centre line of the axle leg (12) in one of two opposing directions, and the rotation about the axle leg (12) is limited by at least one limit stop (28a, 28b; 46a, 46b) determining a stable end position of the bracket.

2. A device according to claim 1, **characterised by** two limit stops (28a, 28b; 46a, 46b) each determining an end position of the axle and associated with the cam.

3. A device according to claim 2, **characterised in that** the spring is a helical spring (22), arranged about a guide element (20), which interacts at one end (20a) in form-fitting manner and movably with the end (16) of the cam (14) and is guided at the other end (20b) by a mounting means (26a, 26b) arranged diametrically opposite the axle in the bracket.

4. A device according to claim 2, **characterised in that** the spring is a leaf spring (40) arched towards the axle and the surface of which extends substantially parallel to the centre line of the axle and whose two ends (40a, 40b) are supported (42a, 42b) relative to the axle and on both sides thereof in the bracket.

5. A bicycle dynamo, having a device provided according to one of claims 1 to 4, arranged fixedly on the end opposite the rotor pinion (6) of the housing (4) thereof, which accommodates rotor and stator.

## Revendications

1. Dispositif de support et de fixation pour le maintien et le blocage dans au moins une position extrême du boîtier (4) recevant un rotor et un stator d'une dynamo de vélo, **caractérisé en ce qu'**un support (8) du dispositif peut tourner d'un angle limité autour d'une branche d'axe du dispositif, qui porte aussi bien un élément de fixation (10) à coupler avec le cadre de vélo qu'une came (14) dépassant radialement, dont l'extrémité libre agit conjointement avec un élément de ressort (22, 40) soutenu à distance en face dans le support, lequel ressort peut exercer sur cette came (14) une force avec une composante qui croise la ligne médiane de la branche d'axe (12) dans l'une des deux directions opposées, et la rotation autour de la branche d'axe (12) est limitée par au moins une butée (28a, 28b ; 46a, 46b) qui détermine une position extrême stable du support.

2. Dispositif selon la revendication 1, **caractérisé par** deux butées (28a, 28b ; 46a, 46b) qui déterminent respectivement une position extrême de l'axe et vont avec la came.

3. Dispositif selon la revendication 2, **caractérisé en ce que** le ressort est un ressort cylindrique (22), disposé autour d'un élément de guidage (20), qui agit conjointement par complémentarité de forme avec une extrémité (20a) et de façon mobile avec l'extrémité (16) de la came (14) et est guidé avec l'autre extrémité (20b) par une fixation (26a, 26b) disposée de façon diamétralement opposée par rapport à l'axe dans le support.

4. Dispositif selon la revendication 2, **caractérisé en ce que** le ressort est un ressort à lames (40) incurvé en direction de l'axe, dont la surface est aménagée de façon sensiblement parallèle à la ligne médiane de l'axe et dont les deux extrémités (40a, 40b) sont soutenues par rapport à l'axe et des deux côtés de l'axe dans le support.

5. Dynamo de vélo pourvue d'un dispositif selon l'une quelconque des revendications 1 à 4, disposé de façon fixe sur l'extrémité située en face du pignon de rotor (6), avec un boîtier (4) recevant son rotor et son stator.
